# EUROPEAN PATENT APPLICATION

(11) **EP 0 555 002 A1**
(43) Date of publication of application: **11.08.1993**
(21) Application number: 93300588.6
(22) Date of filing: 27.01.1993
(51) Int. Cl.: C09K 3/18

(54) **Anti-icing and anti-misting formulations**

(30) Priority: 29.01.1992 FR 9200944
(71) Applicant: Esso Société Anonyme Française, F-92400 Courbevoie (FR)
(72) Inventor: Meric, Yusuf Altan, F-76960 Notre Dame de Bondeville (FR); Lecorbeiller, Gilbert Marie Georges, F-76150 Maromme (FR)
(74) Representative: Fletcher Watts, Susan J.

(57) **Abstract**

An anti-icing and anti-misting formulation which comprises monohydroxy alcohol, polyhydroxy alcohol and emulsifier components, the monohydroxy alcohol component comprising a mixture of two or more monohydroxy alcohols. The formulation can be applied, for example in the form of an aerosol spray, to surfaces such as vehicle windscreens to prevent the formation of mist and ice in cold weather conditions.

## Description

This invention relates to anti-icing and anti-misting formulations for use, for example, on vehicle windows and on other surfaces in cold temperatures.

In cold weather conditions where the temperatures are below freezing, moisture from the air condenses and freezes onto exposed surfaces. In particular ice forms on vehicle windscreens which needs to be removed before the vehicle is used, causing inconvenience and delay. The ice is removed physically or by applying a commercially available de-icer, typically in the form of an aerosol spray. Such devices usually contain alcohols which mix with the ice to lower its melting point.

Where temperatures are slightly above freezing, misting tends to occur, which is especially hazardous when driving as misting over the windscreen causes poor driver visibility.

Cold weather driving can be facilitated by applying a formulation to the vehicle windscreen and windows which prevents the formation of ice and mist. Canadian patent 877851 discloses an anti-fogging and anti-icing agent which consists of a polyethylene glycol or methoxy polyethylene glycol in an alcohol or ketone solvent. Japanese published patent application 62-04773 to Nippon Phyllin KK discloses an anti-fogging composition containing nonionic surfactant, polyhydric alcohol, and ethanol and/or water. Japanese published patent application 75-035035 to Asahi Glass KK discloses an anti-icing and anti-misting composition consisting of an ethanolamide of a higher aliphatic acid, lower alcohol, and a lower glycol. Japanese published patent application 56-133383 to Hatano discloses an aqueous anti-misting agent which comprises an aqueous solution of methanol, ethanol, glycerin, ethylene glycol, diethylene glycol, propylene glycol, triethanolamine, and polyoxyethylene ester type nonionic surfactant.

Notwithstanding the above patent disclosures, there exists a need for a cost-effective formulation with improved anti-icing and anti-misting properties.

Accordingly, the present invention provides an anti-icing and anti-misting formulation which comprises monohydroxy alcohol, polyhydroxy alcohol and emulsifier components, characterised in that the monohydroxy alcohol component comprises a mixture of two or more monohydroxy alcohols.

We have found that by combining two monohydroxy alcohols in the formulation, improved anti-icing and anti-misting properties are obtained compared to formulations containing only one monohydroxy alcohol.

The monohydroxy alcohols are preferably C₁-C₅ monohydroxy alcohols. More preferably the monohydroxy alcohols are a mixture of ethyl alcohol and propyl alcohol, the latter preferably being isopropyl alcohol.

The polyhydroxy alcohol is preferably a C₂-C₆ compound containing 2 or 3 hydroxy groups. More preferably it is a glycol, such as ethylene glycol or propylene glycol. A mixture of two or more polyhydroxy alcohols may be employed, but preferably the formulation contains only one polyhydroxy alcohol, as this has been found sufficient.

The emulsifier is preferably a nonionic or cationic emulsifier. Examples of suitable cationic emulsifiers include amines such as methylethylamine. It is preferred, however, to use a nonionic emulsifier, and examples include carboxylic acid esters, carboxylic amides and ethoxylates. More specifically, the emulsifier is preferably a sorbitan fatty acid ester such as sorbitan monolaurate, sorbitan monostearate or sorbitan monooleate. A particularly preferred emulsifier is polyoxyethylene sorbitan monooleate. Although a mixture of two or more emulsifiers may be employed in the formulation, one emulsifier is usually sufficient.

In a preferred embodiment the formulation according to the invention consists substantially solely of a mixture of two monohydroxy alcohols, a polyhydroxy alcohol and an emulsifier. The formulation provides improved anti-icing and anti-misting properties without the need for additional additives. The compounds of the preferred formulation are readily available at relatively low cost, thus the formulation also has the advantage of being economical.

The preferred proportions of the compounds making up the formulation are as follows, the weight percentages being based on the total weight of the formulation : 40-95 wt.%, more preferably 50-85 wt.%, monohydroxy alcohol mixture; 4-59 wt.%, more preferably 10-50 wt.%, polyhydroxy alcohol; and 0.02-5 wt.%, more preferably 0.1-2 wt.% emulsifier. The formulation may, if desired, be diluted with water.

In use, the formulation may be applied as a liquid, or may be mixed with a propellant and applied as an aerosol. The formulation may be applied to any surface that is exposed to cold temperatures where it is desired to prevent icing and/or misting of the surface. It is particularly suitable for applying, for example spraying, onto vehicle windscreens and windows before a journey is undertaken in order to prevent ice forming and/or misting occurring. As well as being used to prevent icing, the formulation according to the invention may be applied to ice covered surfaces to de-ice the surface.

The invention shall now be illustrated by the following Examples.

### Example 1 (Comparative)

In this Example two formulations A and B were prepared containing only one monohydroxy alcohol for comparative purposes.
- Formulation A: : 85 wt.% ethyl alcohol, 14.5 wt.% ethylene glycol, and 0.5 wt.% polyoxyethylene sorbitan monooleate emulsifier (TWEEN 20 - trade mark, available from ICI plc).
- Formulation B: : 85 wt.% isopropyl alcohol, 14.5 wt.% ethylene glycol and 0.5 wt.% TWEEN 20 emulsifier.

Each formulation was tested for anti-icing properties by applying a coating of the formulation onto a transparent glass plate, cooling the plate to -36°C, and checking periodically for any changes in visibility through the glass plate. The results are given in Table 1.

Formulation B was also tested for anti-misting properties by spraying the formulation onto a transparent glass plate, cooling the plate to 0°C for 60 minutes, and checking for any changes in visibility through the glass plate. The plate was then exposed to a number of warming/cooling cycles where the plate was warmed to 5°C for 30 minutes and then cooled to 0°C for 60 minutes. The visibility through the plate was checked after each cycle. The results are given in Table 2.

### Example 2

A formulation was prepared as described in Example 1 for formulation A except that the 85 wt.% ethyl alcohol was replaced with a mixture of 42.5 wt.% ethyl alcohol and 42.5 wt.% isopropyl alcohol.

The formulation was tested for anti-icing and anti-misting properties as described in Example 1 and the results are given in Tables 1 and 2 respectively.

### Example 3

A formulation containing 25 wt.% ethyl alcohol, 25 wt.% isopropyl alcohol, 48.5 wt.% propylene glycol and 1.5% TWEEN 20 emulsifier was prepared and tested for anti-icing properties as described in Example 1, except that the glass plate was cooled to -30°C. The results are given in Table 1. The formulation was also tested for anti-misting properties as described in Example 1 and the results are given in Table 2.

**TABLE 1 :ANTI-ICING PROPERTIES**

| Example | Visibility | | |
|---|---|---|---|
| | After 4 hours | After 3 days | After 1 week |
| 1A | Very good | Reduced due to frost formation | - |
| 1B | Very good | Reduced due to frost formation | - |
| 2 | Very good | Very good | Very good |
| 3 | Very good | Very good | Very good |

**TABLE 2 : ANTI-MISTING PROPERTIES**

| Example | Visibility | | |
|---|---|---|---|
| | After initial cooling | After 1 warm/cool cycle | After 2 warm/cool cycles |
| 1B | Very good | Some misting | Some misting |
| 2 | Very good | Very good | Very good |
| 3 | Very good | Very good | Very good |

## Claims

1. An anti-icing and anti-misting formulation which comprises monohydroxy alcohol, polyhydroxy alcohol and emulsifier components, characterised in that the monohydroxy alcohol component comprises a mixture of two or more monohydroxy alcohols.

2. A formulation according to claim 1 wherein the monohydroxy alcohol component comprises a mixture of ethyl alcohol and propyl alcohol.

3. A formulation according to claim 1 or 2 wherein the polyhydroxy alcohol is a glycol.

4. A formulation according to claim 3 wherein the glycol is ethylene glycol or propylene glycol, or a mixture thereof.

5. A formulation according to any preceding claim wherein the emulsifier is nonionic or cationic.

6. A formulation according to any of claims 1 to 4 wherein the emulsifier is nonionic.

7. A formulation according to any preceding claim which comprises :
(i) 40-95 wt.% monohydroxy alcohol
(ii) 4-59 wt.% polyhydroxy alcohol; and
(iii) 0.02-5 wt.% emulsifier,
the weight percentages being based on the total weight of the formulation.

8. An aerosol mixture comprising the anti-icing and anti-misting formulation according to any preceding claim and an aerosol propellant.
